(19) Europäisches Patentamt
European Patent Office
Office européen des brevets

(11) **EP 3 408 530 B1**

(12) **EUROPEAN PATENT SPECIFICATION**

(45) Date of publication and mention
of the grant of the patent:
**11.10.2023 Bulletin 2023/41**

(21) Application number: **17710611.9**

(22) Date of filing: **25.01.2017**

(51) International Patent Classification (IPC):
**F02M 63/02** (2006.01)     **F02M 65/00** (2006.01)
**F02M 57/00** (2006.01)     **F02D 41/38** (2006.01)
**G01F 1/88** (2006.01)     **F02M 47/02** (2006.01)

(52) Cooperative Patent Classification (CPC):
**F02M 63/025; F02D 41/3845; F02M 57/005;**
**F02M 65/001; F02M 65/003; G01F 1/88;**
F02D 2200/0602; F02D 2200/0604;
F02D 2200/0616; F02M 47/02; F02M 2200/247;
F02M 2200/248

(86) International application number:
**PCT/IB2017/050370**

(87) International publication number:
**WO 2017/130104 (03.08.2017 Gazette 2017/31)**

(54) **INJECTION SYSTEM, APPARATUS AND METHOD FOR CONTROLLING THE QUANTITY OF FUEL INJECTED**

EINSPRITZSYSTEM, VORRICHTUNG UND VERFAHREN ZUR STEUERUNG DER MENGE DES EINGESPRITZTEN KRAFTSTOFFS

SYSTÈME, APPAREIL ET PROCÉDÉ POUR COMMANDER LA QUANTITÉ DE CARBURANT INJECTÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.01.2016 IT UB20160530**

(43) Date of publication of application:
**05.12.2018 Bulletin 2018/49**

(73) Proprietor: **Politecnico di Torino
10129 Torino (IT)**

(72) Inventor: **FERRARI, Alessandro
10129 Torino (IT)**

(74) Representative: **Ferroni, Filippo et al
Metroconsult Genova S.r.l.
Via Palestro, 5/2
16122 Genova (IT)**

(56) References cited:
**EP-A1- 2 138 694     EP-A1- 2 796 690
WO-A2-2009/019591     DE-A1-102007 052 092**

**Description**

The present invention relates to a fuel injection system as well as to an apparatus and a method for controlling the quantity of fuel injected into an internal combustion engine, in particular a Diesel-cycle or Otto-cycle engine or the like.

As is known, the operation of an internal combustion engine, in particular a Diesel-cycle engine, produces a considerable amount of polluting substances that, in addition to polluting the environment, can directly have adverse effects on the human body, particularly on the respiratory system; in fact, unburnt hydrocarbons in the form of micro particulate can reach the lung alveoli and compromise the operation thereof, thereby inducing pathologies such as asthma, chronic obstructive pulmonary disease (COPD), and several cardiovascular disorders.

Aiming at reducing this kind of pollution, car and/or engine manufacturers have conceived several solutions, such as, for example, particulate filters (FAP), traps or the like. Although effective on PM100, these solutions are not however very effective on PM10. Hence, the necessity of finding alternative solutions that will improve the efficiency of engines by causing them to produce less unburnt hydrocarbons, without at the same time significantly altering the power and torque of an internal combustion engine nor the fuel efficiency thereof.

This problem can be tackled in a satisfactory manner by controlling very accurately, among other things, the quantity of fuel introduced into the cylinders of an engine. This allows reducing the quantity of unburnt hydrocarbons produced by an internal combustion engine, because the fuel is always injected in an amount that the engine can burn (almost) completely. Moreover, the injection systems known in the art can carry out more than one injection during each operating cycle (e.g. one or more pilot injections, one main injection, one or more injections after the main one, called after-injections, and one post-injection, the latter being required by emission treatment systems), for reduced exhaust emissions, better fuel efficiency and less engine noise. Since each one of the multiple injections carried out per cycle has a shorter duration than a single injection supplying a quantity of fuel similar to the total quantity injected with multiple injections, in current injection systems it is even more important to be able to properly estimate the quantity of fuel injected during every single injection of the injection train.

For better control over the quantity of fuel injected, different approaches have been adopted (see Jorach RW et al., 2011, ' Common Rail system from Delphi with solenoid valves and single plunger pump', MTZ 03/2011, Vol. 72.) which are based on the development of systems having special shapes and/or on the addition of pressure sensors within an injector (see Matsumoto S. et al., 2013, 'The New Denso Common Rail Diesel Solenoid Injector', MTZ 021/2013, Vol. 74).

Nevertheless, these solutions suffer from the drawback that they can only be used on newly designed engines or require injector replacement, since the control over the quantity of fuel injected cannot be easily and rapidly implemented on existing engines or on engines installed in vehicles already in circulation.

The International patent publication WO 2009/019591 A2 to POLITECNICO DI TORINO describes how to estimate the flow rate of a fuel flow on the basis of two pressure values measured in two different positions of an injection duct of an injector. The European patent application EP 2 796 690 A1 to LIEBHERR MACHINE BULLE describes how to control the quantity of injected fuel on the basis of the pressure reading carried out by a single sensor placed in the fuel duct (common rail).

The publication of European patent application EP 2 138 694 A1 to HONDA MOTOR describes how to measure the flow rate of a fuel flow entering an injector through a calibrated orifice positioned in the conduit connecting the (common) rail to the injector, and a pressure gauge configured to measure the pressure drop generated by said calibrated orifice.

The present invention aims at solving these and other problems by providing an injection system, an apparatus and a method for controlling the quantity of fuel injected into an internal combustion engine as set out in the appended claims.

The basic idea of the present invention is to employ sensor means positioned upstream or downstream of a fuel rail (e.g. a Common Rail or the like), which is in fluidic communication with an injector via an injection duct, wherein said sensor means are capable of detecting at least one property (e.g. static and/or dynamic pressure, mass flow, or the like) of a fuel flow entering or exiting said injector, so that a control unit can determine, on the basis of said at least one property detected, at least one flow rate and/or mass of the fuel flow entering or exiting said injector, and activate said injector on the basis of the flow rate and/or mass of said fuel flow, so as to control the flow rate or the quantity of fuel injected into the engine by the injector.

In this way, it is possible to control the quantity of fuel injected during each injection, without having to use specific injectors equipped with an internal pressure sensor. Thus, the control over the quantity of fuel injected during each injection can also be implemented on engines using components already available on the market or even already installed in vehicles in circulation, so as to reduce the emissions of unburnt hydrocarbons and improve the overall efficiency of said engines. Furthermore, this control possibility considerably simplifies the setup stage of an internal combustion engine, i.e. the stage in which engineers create the so-called engine maps (or similar representations of control information) that are then stored into the electronic control unit that manages the operation of the engine; by using this invention, in fact, engineers can directly specify the fuel quantity and/or flow rate that needs to be introduced into an internal combustion engine in a given operating condition, as an alternative to or in combination with control variables such as activation (energization) time of the injector, which, as is known, does not allow direct control over the flow rate and/or quantity of fuel injected into an engine, leading to inaccurate control over the flow rate and/or quantity of fuel injected.

Further advantageous features of the present invention will be set out in the appended claims.

These features as well as further advantages of the present invention will become more apparent from the following description of an embodiment thereof as shown in the annexed drawings, which are supplied by way of non-limiting example, wherein:

- Fig. 1 illustrates an injection system according to the invention;
- Fig. 2 illustrates the architecture of an engine control unit included in the system of Fig. 1;
- Fig. 3 shows a graph that, for different values of the nominal pressure in the rail, represents the trend of the relation between the fuel mass $M_{inj,in}$ entering an injector comprised in the system of Fig. 1 and the fuel mass $M_{inj}$ injected by said injector;
- Fig. 4 shows a block diagram of a control system that manages the operation of the injection system of Fig. 1;
- Fig. 5 shows a graph that is useful to describe the dynamics of an injection executed by the system of Fig. 1;
- Fig. 6 shows a graph that describes the dynamics of an injection that is shorter than that shown in Fig. 5 (also known as small injection) executed by the system of Fig. 1;
- Fig. 7 illustrates a first variant of the main embodiment of the injection system of Fig. 1;
- Fig. 8 illustrates a second embodiment of the injection system of Fig. 1;
- Fig. 9 illustrates a third embodiment of the injection system of Fig. 1;
- Fig. 10 shows a graph that, for different values of the nominal pressure in the rail, represents the trend of the relation between the fuel mass $M_{dyn}$ exiting a pilot valve of an injector comprised in the system of Fig. 9 and the fuel mass $M_{inj}$ injected by said injector.

Any reference to 'an embodiment' in this description will indicate that a particular configuration, structure or feature is comprised in at least one embodiment of the invention. Therefore, the phrase 'in an embodiment' and other similar phrases, which may be present in different parts of this description, will not necessarily be all related to the same embodiment. Furthermore, any particular configuration, structure or feature may be combined in one or more embodiments in any way deemed appropriate. The references below are therefore used only for simplicity's sake and do not limit the protection scope or extent of the various embodiments.

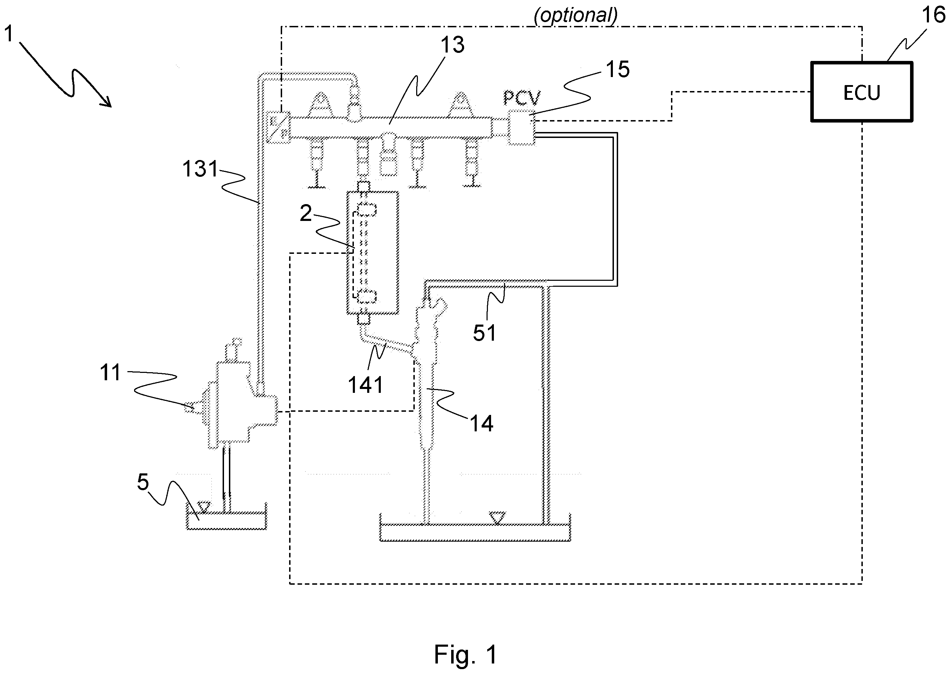

With reference to Fig. 1, an injection system 1 according to the invention comprises the following parts:

- a low-pressure fuel pump (not shown in the annexed drawings) positioned inside a tank 5 and adapted to generate a pressure capable of transferring out of the tank the fuel (diesel oil, petrol or the like) contained therein;
- a fuel filter (not shown in the annexed drawings), which is in fluidic communication with the delivery side of said low-pressure pump, and which is adapted to remove any solid impurities suspended in the fuel and/or to precipitate onto its own bottom any water contained in solution in said fuel;
- an injection pump 11 positioned downstream of the filter and adapted to raise the fuel pressure value to, preferably, several hundred bars, when the fuel is petrol, or to a value that may even exceed 2,000 bars, when the fuel is Diesel oil (e.g. up to 3,000 bars);
- a fuel rail 13 (also referred to as 'common rail' or, more simply, 'rail'), which is in fluidic communication with the delivery side of the injection pump 11 via a supply duct 131, wherein said ducts 13,131 have such mechanical characteristics (e.g. the material they are made of, their shape, etc.) that allow a flow of fuel at the pressure generated by the injection pump 11;
- at least one electroinjector 14 (hereinafter referred to as 'injector'), which is in fluidic communication with the fuel rail 13 via an injection duct 141 having mechanical characteristics similar to those of the ducts 13,131, wherein said injector 14 is configured for injecting, when commanded to, i.e. only when it is activated, a predefined quantity of fuel into the engine;
- sensor means 2 positioned upstream of said injector 14, preferably along the injection duct 141, and capable of detecting at least one property (e.g. static and/or dynamic pressure, mass flow, etc.) of a fuel flow entering or exiting said injector 14;
- an engine control unit 16 (ECU, also referred to as 'apparatus for controlling the quantity of fuel injected') adapted to manage the operation of the engine, wherein said unit 16 is in signal communication, preferably via a CAN-BUS network or the like, with at least the injection pump 11, the sensor means 2 and the injector 14, so that it can detect an input fuel flow rate $G_{inj,in}$ entering the injector 14 (wherein said flow rate $G_{inj,in}$ may also exit the injector 14 via the duct 141 in case of reverse flow), and preferably also the number of revolutions $n_{pump}$ of the pump 11, so as to be able to process, on the basis of control rules that will be better explained below, an injector activation signal $act_{inj}$ that will cause a predefined fuel quantity and/or flow rate to be injected into the internal combustion engine;

- pressure control means comprising, preferably, a pressure control valve (PCV) 15 installed on the fuel rail 13 in signal communication with said control unit 16, and so positioned as to put the fuel rail 13 in fluidic communication with a fuel recovery duct 51 (which is under a pressure close to the pressure in the tank 5) when the pressure in the rail 13 reaches a given pressure threshold; to this end, the control unit 16 may optionally generate a control signal $dutycycle_{PCV}$ in order to configure the pressure control valve 15 (which will be described more in detail hereinafter) for keeping a predefined nominal pressure $p_{nom}$ in the fuel rail 13.

The valve 15 (PCV) preferably comprises the following parts:

- a sealing piston, on which a force is exerted by the pressurized fuel contained in the rail 13;
- a preload spring acting upon said piston and generating a force capable of overcoming the force generated by the fuel in the rail 13 when this fuel is under a pressure typically lower than 100 bars (for a Diesel-cycle engine);
- a coil, which, when electric current flows through it, preferably induced by the control signal $dutycycle_{PCV}$, can generate a magnetic field that exerts a force on the piston; this force, combined with the force generated by the preload spring, can overcome the force generated by the fuel when the latter is under a pressure higher than 100 bars and up 2,000 bars or more.

In brief, the higher the mean current circulating in the coil, the higher the intensity of the electromagnetic force acting upon the sealing piston and the higher the pressure threshold beyond which the piston will change its position and put the fuel rail 13 in fluidic communication with a fuel recovery duct 51.

This pressure threshold can be set by the control unit 16 and allows changing the level of the nominal pressure $p_{nom}$ that can be reached in the rail 13, thus making it possible to control the pressure in the injection system.

It must be pointed out that in Fig. 1 the injection pump 11 and the injector 14 are both in fluidic communication with both the fuel rail 13 (high pressure) and the fuel recovery duct 51 (low pressure). This is because Fig. 1 illustrates an injection system of a Diesel-cycle engine, in which the pressure in the fuel rail 13 is of the order of thousands of bars and may therefore cause fuel leakage. Moreover, Common Rail injectors for Diesel-cycle engines may comprise a pilot electrovalve actuated by a solenoid or a piezoelectric element, wherein said valve is so configured that, when the injector actuation system is activated, the pilot valve will open to allow the flow of a certain quantity of fuel coming from the rail 13 (high pressure), which will cause the injector to open and inject the fuel into the Diesel-cycle engine. This mechanism (useful for operating at such high pressure values) produces, for each injection, a flow of fuel which is discharged at low pressure by the pilot valve and which needs to be recovered through the fuel recovery duct 51.

It should also be highlighted that this invention is applicable, in addition to Diesel-cycle engines, also to all other engine types (e.g. Otto-cycle engines, Atkinson-cycle engines, etc.) that make use of fuel injectors, which usually do not include a pilot valve.

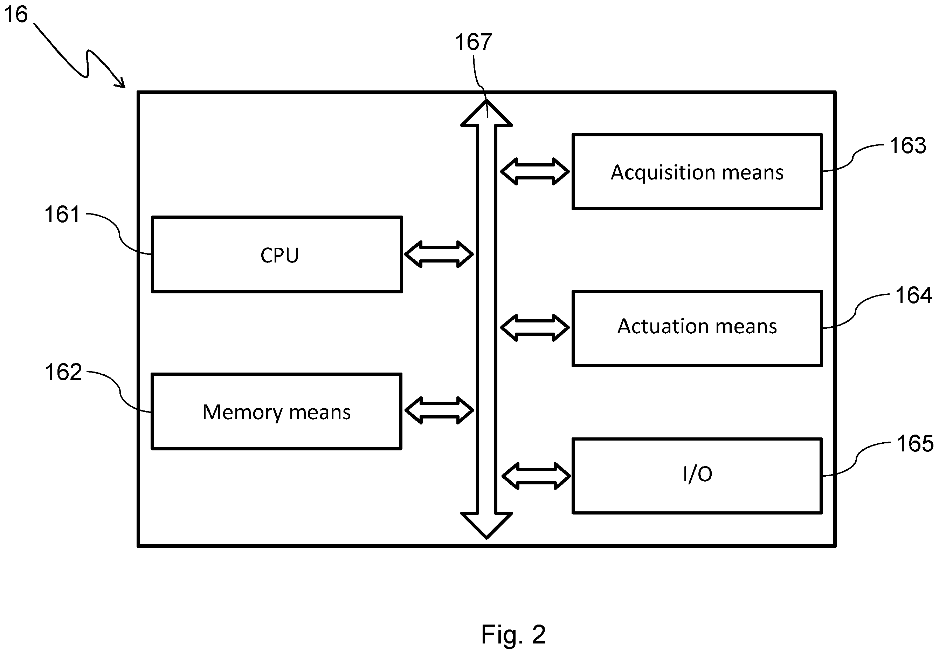

Also with reference to Fig. 2, the following will describe the engine control unit 16 (also referred to as 'apparatus for controlling the quantity of fuel injected into an internal combustion engine'); said unit 16 comprises the following components:

- processing and control means 161 (also referred to as 'computing means', e.g. one or more CPUs, which govern the operation of the injection system 1, preferably in a programmable manner, through the execution of suitable instructions;

- memory means 162, e.g. a random access memory (RAM) and/or a Flash memory and/or a memory of another type, which are in signal communication with the processing and control means 161, and wherein said volatile memory means 162 preferably store at least the instructions that can be read by the processing and control means 161 when the unit 16 is in an operating condition;

- acquisition means 163, e.g. an interface for a CAN-BUS network or the like, which are in signal communication with the processing and control means 161 and are configured for acquiring measurement information detected by sensor means 2 positioned upstream or downstream of the fuel rail 13 (meaning, in the latter case, also downstream of the pilot stage of the injector, for detecting the flow rate at the output of the pilot stage of the injector, as will be further described in the following embodiments of the invention), and preferably also for acquiring the number of revolutions $n_{pump}$ of the pump 11 and/or for detecting the current signal actually supplied to the injector;

- actuation means 164, e.g. an injector drive circuit, which are in signal communication with the processing and control means 161 and which are configured for generating an electric current that can energize the solenoid or the piezoelectric element of the injector 14 or control an injector drive circuit external to said unit 16 and/or drive the PCV valve 15;

- input/output (I/O) means 165, which may be used, for example, for connecting said device 16 to peripherals or to a programming terminal configured for writing instructions (which the processing and control means 161 will have to execute) into the memory means 162 and/or for allowing the diagnosis of the injection system 1 and/or of the engine and/or of the whole vehicle in which said apparatus 16 has been installed; such input/output means 165 may comprise, for example, a CAN-BUS, USB, Firewire, RS232, IEEE 1284 adapter or the like;

- a communication bus 167 allowing information to be exchanged among the processing and control means 161, the memory means 162, the acquisition means 163, the actuation means 164 and the input/output means 165.

As an alternative to the communication bus 167, the processing and control means 161, the memory means 162, the acquisition means 163, the actuation means 164 and the input/output means 165 may be connected by means of a star architecture.

The injection pump 11 may comprise revolution speed measuring means (e.g. an encoder, a pulse wheel or the like), which allow measuring the revolution speed $n_{pump}$ of the pump 11.

As an alternative to or in combination with this solution, the revolution speed $n_{pump}$ may also be determined, if the pump 11 is actuated by an accessory belt or a timing chain driven by the engine crankshaft, by sensing the revolution speed of the engine and multiplying it by a mechanical transmission ratio; on the other hand, if the pump 11 is driven by an electric motor, preferably a synchronous, permanent-magnet one, the speed of which is controlled by the engine control unit 16 preferably via an electronic speed controller (ESC), the revolution speed $n_{pump}$ of the pump 11 may be detected, as opposed to physically (i.e. by using speed measuring means), simply by reading speed information from the memory means 162 (cfr. Fig. 2), since said speed information is generated by the computing means 161 and is then sent to the electronic speed controller, which will take care of adjusting the speed of the pump 11.

The memory means 162 of the engine control unit 16 store engine control information that allows the unit 16 to control the operation of the engine in different working conditions, by associating injection information with each working condition. More in detail, this information is preferably stored in the form of maps that allow associating injection information (quantity to be injected, nominal pressure in the rail, number of injections, injection phasing, injector energization time and/or injector dwell time, etc.) with one or more respective inputs (e.g. engine speed, air temperature, coolant temperature, EGR valve position, boost pressure, accelerator pedal position, driver-selected settings, throttle valve position, if present, or the like).

It is nevertheless also possible, for a man skilled in the art, to store at least a part of the engine control information in a form other than maps (e.g. as a sequence of instructions allowing real-time computation of the injection information), without however departing from the teachings of the present invention. The injection information defines the quantity of fuel that must be injected as a whole during at least a part of an operating cycle of the engine; such quantity of fuel to be injected can be represented as a numerical value (either an integer or a floating-point value) corresponding to the quantity of fuel that must be injected during a part of the operating cycle of the engine and, optionally, as a second numerical value representing the number of injections that must be executed during said part of the operating cycle. In this manner, the unit 16 can compute the trend (i.e. at least one value) of the fuel flow rate (preferably the mean flow rate) or fuel mass that must flow through the injector 14 within the time interval of said part of the operating cycle of the engine. For example, if three injections are to be carried out during said operating cycle, the control unit 16 can be configured for determining the trend of said fuel flow rate in such a way that during the first and/or the third injection a quantity of fuel will be injected which is one tenth of the quantity of fuel injected during the second injection (which in this example represents the main injection) . As an alternative to this representation, the quantity of fuel to be injected into the engine during at least a part of an operating cycle of the engine may also be represented as a sequence of fuel flow rate values, wherein said sequence allows defining the trend of the fuel flow rate that must be injected by the injector 14 during said part of the operating cycle of the engine. In this manner, it is possible to define the trend of the fuel flow rate in such a way that a number of injections per (part of) arbitrary cycle can be specified, wherein during each one of said injections the injector 14 will inject a predefined quantity of fuel into the engine.

As already described, it must be pointed out that the injection information defines the quantity of fuel that must be injected during at least a part of the operating cycle of the engine, as opposed to during a complete operating cycle of the engine. This means that the unit 16 can be configured for changing the trend of the fuel flow rate to be injected in the course of one operating cycle of the engine. It will thus be possible to ensure proper combustion of the injected fuel, because the unit 16 can monitor the actual ignition of the injected fuel, preferably through fuel ignition sensors (which may comprise, for example, the piezoelectric elements of the injectors or dedicated piezoelectric sensors mounted in the combustion chamber, or the like) in signal communication with said unit 16 and simple combustion diagnosis models implemented in the unit 16 (such as, for example, one-zone, three-zone or multi-zone models), and, should the injected fuel be burnt incorrectly during at least a part of the operating cycle of the engine, it will be able to change the trend of the injected flow rate, preferably before the conclusion of said operating cycle or starting from the next operating cycle, so as to reduce the exhaust emissions, improve the efficiency of the engine, reduce the combustion noise and extend the life of the lubricant. In other words, the acquisition means 163 are also configured for acquiring ignition information detected by the fuel ignition sensors configured for detecting pressure variations in the combustion chamber, and the processing and control means 161 are configured for determining the burnt fuel flow rate as a function of the in-cylinder time, by means of combustion models, also on the basis of said ignition information that describes the evolution of the combustion occurring in the cylinder.

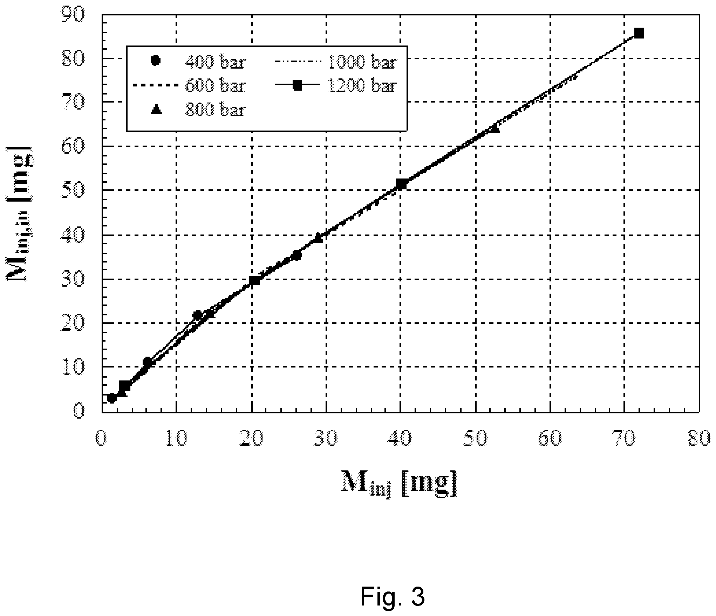

Also with reference to Fig. 3, the following will describe the relation that binds the fuel mass $M_{inj,in}$ entering the injector 14 and the fuel mass $M_{inj}$ injected by said injector 14; this relation allows, in fact, estimating the quantity/flow rate of fuel injected by the injector 14 into the internal combustion engine on the basis of a quantity/flow rate of fuel entering the injector 14, determined according to at least one piece of measurement information detected by the sensor means 2, which will be described in detail below.

The Applicant has observed that, for the injector 14, a simple relation exists between the quantities $M_{inj,in}$ and $M_{inj}$, said relation being often independent of the nominal pressure in the rail ($p_{nom}$) and being weakly dependent on the energization time ($ET$), which are determined by the unit 16 on the basis of the injection information; this relation can be obtained by taking preliminary measurements on the injection system 1 (prior to installing it on the engine) by using a hydraulic bench configured for measuring the fuel flow rates entering and exiting the injector 14 (for example, an EVI meter can be used for measuring the instantaneous injected flow rate, an EMI meter can be used for measuring the injected mass, while Mexus and Moehwald HDA meters or the like can be used for measuring both the instantaneous flow rate and the mass), or possibly with the aid of numerical models of the injection system.

It must be pointed out that the relation between said quantities $M_{inj,in}$ and $M_{inj}$ may also be more complex (it depends on the injector type), and can translate, in general, into a bundle of distinct curves $M_{inj,in}=f(M_{inj}, p_{nom})$, wherein each curve is identified by a specific value of $p_{nom}$. In addition, said relation must be obtained for each specific type of injector 14, and the resulting relations $M_{inj,in}=f(M_{inj}, p_{nom})$ can advantageously be used by the control unit 16 for controlling the quantity/flow rate of fuel injected into the engine. For this purpose, the engine control information may comprise the relations $M_{inj,in}=f(M_{inj}, p_{nom})$ encoded as considered appropriate (e.g. as maps).

It must also be pointed out that it is also possible to exploit the relation between $M_{inj,in}$ and $M_{inj}$ with respect to the energization time $ET$, thereby obtaining curves parameterized as a function of $ET$ according to the relation $M_{inj,in}=f(M_{inj}, ET)$; such relations can therefore be used by the control unit 16 for controlling the quantity/flow rate of fuel injected into the engine. To this end, the engine control information may comprise the relations $M_{inj,in}=f(M_{inj}, ET)$ encoded as considered appropriate (e.g. as maps).

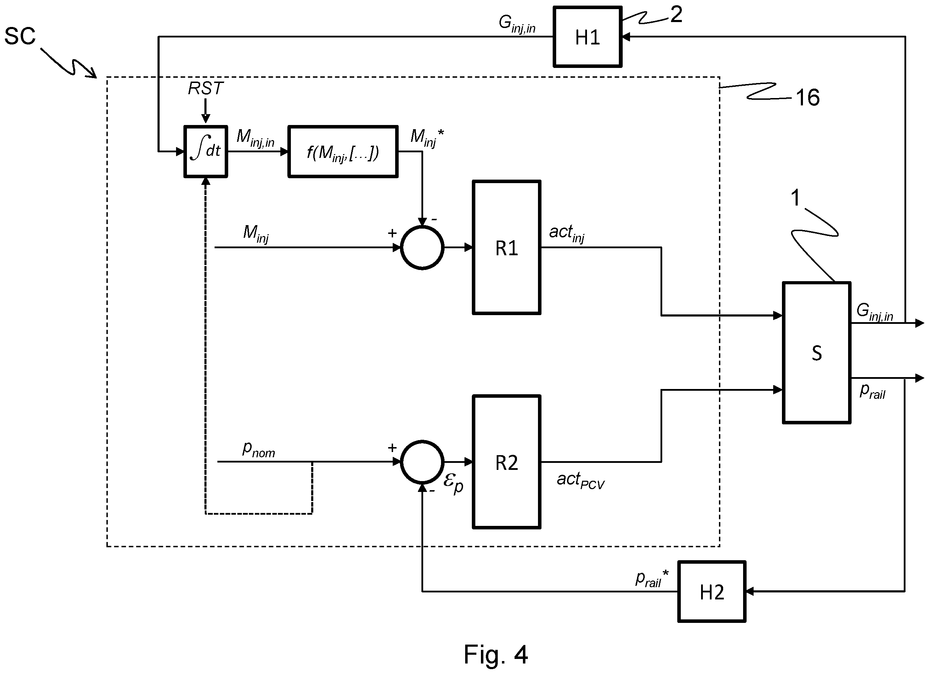

With reference to Fig. 4, the following will describe one possible control system SC managing the operation of the injection system 1.

The control system SC is configured for controlling the rail pressure $p_{rail}$; for this purpose, said system SC comprises a first control loop that controls the energization time of the injector 14. To do so, the control unit 16 is configured for executing the following steps:

> a. detecting, via the measurement means 2, the input mass flow rate $G_{inj,in}$ entering the injector 14;
>
> b. determining, via the computing means 161, the input fuel mass $M_{inj,in}$ entering the injector 14 by integrating in time (e.g. by means of a summation operation) the input mass flow rate $G_{inj,in}$ (after having appropriately defined the initial and final instants of integration);
>
> c. determining, via the computing means 161 and by using one of the relations $f(M_{inj})$, $f(M_{inj}, p_{nom})$ or $f(M_{inj}, ET)$, the injected mass $M_{inj}^*$ on the basis of the input fuel mass $M_{inj,in}$.

Since the value of the input injected mass $M_{inj,in}$ entering the injector 14 is representative of only one operating cycle of the engine or of a single injection, this integration operation should preferably restart at the end of every injection or at least of every operating cycle of the engine; for this purpose, the value of the estimated injected quantity $M_{inj}^*$ must be reset at the beginning of every injection or at least of every operating cycle of the engine, e.g. by generating a reset signal RST.

When the injection system 1 is in an operating condition, the difference between the estimated mass $M_{inj}^*$ and the desired value of the mass to be injected $M_{inj}$ during a given portion of the operating cycle (computed on the basis of the injection information) is inputted to the controller R1 (which may preferably be provided in the form of a PID controller), which then generates the output signal $act_{inj}$, thereby causing the injector to be energized for a certain period of time (ET); in fact, if $M_{inj}^*-M_{inj} \neq 0$, then the energization time (or times, in case of multiple injections) will be different from the 'nominal' values set in the maps of the control unit. Thus, each injector will be controlled on the basis of the injected quantity estimate $M_{inj}^*$.

In this way it will be possible, for example, to manage the ageing of the injector; it is in fact known that the quantity actually injected by the injector can change over time for given values of $ET$ and $p_{nom}$, resulting also in changes in the mass $M_{inj,in}$ measured at the input of the injector as an integral with respect to the time of $G_{inj,in}$. Therefore, the control system can also compensate for injector performance variations caused by injector ageing, thus preserving the efficiency of the engine and keeping the exhaust emissions within the correct range for a longer time than prior-art solutions.

It is likewise possible to control the variations occurring in the injected quantity following changes in the dwell time between successive injection pulses in case of multiple injections; as a matter of fact, such variations are caused by pressure waves propagating in the system.

Moreover, the control system SC is preferably also configured for controlling the pressure control valve 15 (also called 'flow limiter valve') installed in the fuel rail 13; to this end, said control system comprises a controller R2, preferably a PID controller or the like, configured for actuating the valve 15 according to the difference $\varepsilon_p$ between the value $p_{rail}{}^*$, preferably equal to the mean value over time or to the maximum value of the pressure $p_{rail}(t)$ detected by a pressure sensor H2 (shown in Fig. 1) installed in the rail, and the numerical value $p_{nom}$ determined on the basis of the engine control information (i.e. stored in the maps of the control unit). As aforementioned, the control system can preferably be provided in the form of a PID controller receiving as input the signal $\varepsilon_p$ and generating as output, preferably according to a Pulse Width Modulation (PWM) logic, a signal $act_{PCV}$ that preferably acts upon the PCV valve 15 to control the flow section thereof.

The sensor means 2 may comprise at least one pressure sensor, preferably of the piezoresistive or piezoelectric type. For the purpose of explaining how this sensor can be used for measuring the flow rate of fuel flowing along the injection duct 141, the following will analyze the dynamics of an injection that was studied by the present Applicant on a hydraulic test bench; in particular, a case will be presented first wherein a long injection is made by a solenoid-type injector.

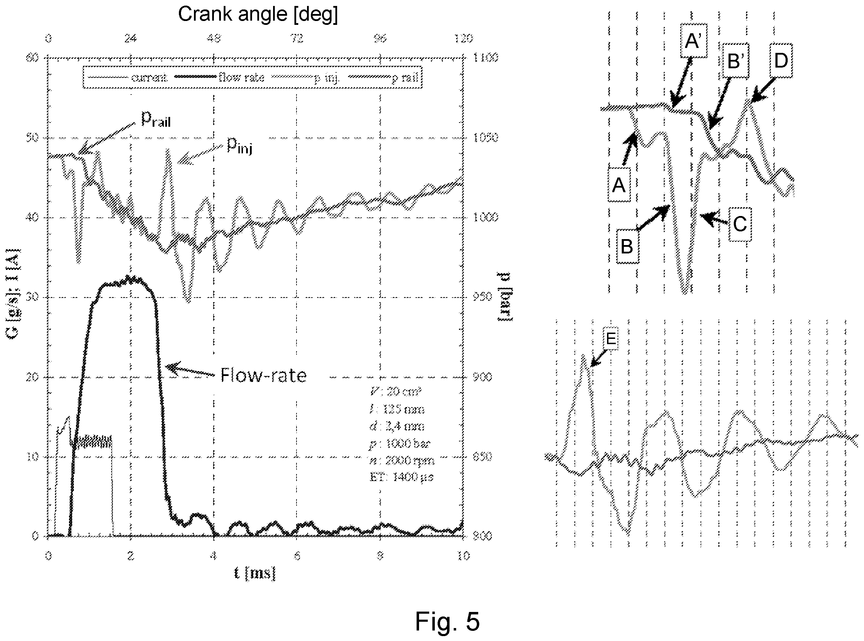

Also with reference to Fig. 5, the following will describe the injection law (i.e. mass flow rate injected as a function of time) and the distributions over time of the rail pressure $p_{rail}$ measured in the fuel rail 13 and of the injection pressure $p_{inj}$ measured along the injection duct 141, i.e. between the fuel rail 13 and the injector 14 in the case of a single injection having an energization time ET of 1,400 $\mu$s, a nominal pressure $p_{nom}$ of approx. 1,000 bar, and an engine revolution speed of 2,000 rpm. The diagram clearly shows that $p_{rail}$ is not constant over time: following the injection of fuel, it can be noticed that the pressure in the fuel rail 13 drops by approx. 50 bars from the initial value.

The pressure drop indicated as A in the diagram of $p_{inj}$ (see magnified detail) is due to the pilot valve opening upon delivery of current to the injector solenoid from the control unit 16. The rarefaction wave caused by the opening of the pilot valve and the subsequent outflow of fuel from the pilot stage produces its effect also on $p_{rail}$, which shows a slight decrease (event A') with a delay of approx. 0.2 ms from the event 1 due to the times of wave propagation (in the magnifications, the dashed vertical lines are spaced apart by 0.2 ms). The opening of the pilot valve and the resulting emptying of the control chamber at the back of the needle of the main stage of the injector cause the needle to rise and fuel to be injected through the holes of the nozzle. This considerable event triggers a second, more intense depression wave (the injection of fuel creates, in fact, a temporary pressure reduction in the injector) that propagates along the injection duct 141 towards the fuel rail 13, shown in the signal $p_{inj}$ as event B and in the signal $p_{rail}$ as event B'.

When said injection-induced rarefaction wave reaches the fuel rail 13, it is reflected by the latter as a compression wave propagating towards the injector 14. The compression wave results in an increased $p_{inj}$, shown as event D: note that the time interval between the events B and B' is the same as the one between the events B' and D, in that the spatial distance covered by the wave phenomena is the same in both cases and corresponds to the distance L between the installation point of the pressure sensor comprised in the sensor means 2, which provides $p_{inj}$, and the fuel rail 13. The event referred to as C has no relationship with the presence of the fuel rail 13; in fact, it can be demonstrated by means of numerical simulations that it is caused by non-stationary phenomena originating on the nozzle of the injector after the injection, which then propagate along the injection duct 141, i.e. between the injector 14 and the fuel rail 13. When injection ends, a hydraulic hammer phenomenon occurs in the nozzle, which produces a sudden pressure increase within the injector, which then propagates towards the rail, resulting in the event E in the diagram of $p_{inj}$. From this instant onwards, the injector is closed and the pressure waves propagate and are reflected between the fuel rail 13 and the closed injector, thus generating the oscillating trend of $p_{inj}$. It should be noted that the time phasing of the event E with respect to the other events depends on $ET$: in fact, if the energization time of the solenoid is progressively reduced, the event E will approach the event D.

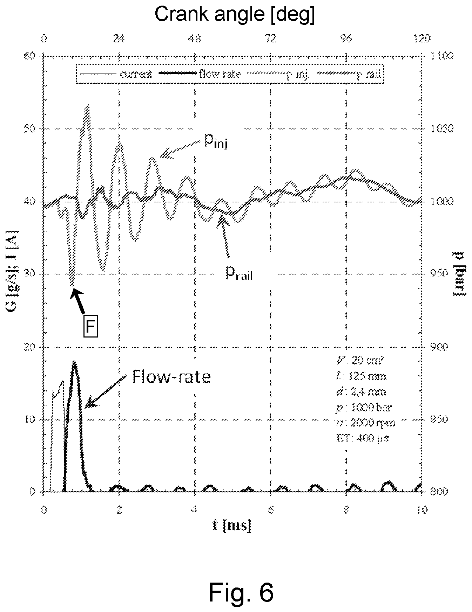

Also with reference to Fig. 6, it can be noticed in particular that, for $ET$=400 $\mu$s, the events D and E interfere with each other, thus originating a single high-intensity compression peak (hydraulic resonance conditions).

In particular, a critical value of the solenoid energization time can be defined, referred to as $ET_{cr}$, at which value the wave reflected by the fuel rail 13 reaches the point where $p_{inj}$ is detected at the instant $t_1{}^*$ synchronously with the hydraulic hammer. For $ET < ET_{cr}$, the signal $p_{inj}(t)$, from the instant $t_0$, at which the electric current supplied to the injector becomes significantly positive, to the instant $t_1{}^*$ is determined, in practice, only by the pressure waves coming from the injector and hence propagating in a single direction, i.e. from the injector towards the fuel rail 13. In such conditions, the instantaneous mass flow rate passing through the section where $p_{inj}(t)$ is measured can be determined by starting from the signal $p_{inj}$ alone, i.e. by means of a single pressure transducer, according to the following equation:

$$G_{inj,in}(t) = \frac{A}{a} \left[ p_{inj}(t_0) - p_{inj}(t) \right] \qquad t_0 < t < t_1^* \qquad (1)$$

where A is the internal cross-section of the duct where the pressure sensor, preferably a piezoresistive or piezoelectric one, is installed for measuring $p_{inj}$, and a is the speed of sound. In this manner, the control unit 16 can determine $M_{inj,in}$ by integrating in time, until the injection end instant $t_1 \leq t_1^*$ (the meaning of $t_1$ will be clarified below), the trend of the input flow rate $G_{inj,in}$ entering the injector 14, wherein the latter is computed by the computing means 161 with the formula 1 on the basis of the injection pressure $p_{inj}$ that, as aforementioned, can be detected by the sensor means 2 comprising a single pressure meter; subsequently, the control unit 16 can determine the injected mass $M_{inj}$ on the basis of the input mass $M_{inj,in}$ by means of one of the relations $f(M_{inj,in})$, $f(M_{inj}, p_{nom})$ or $f(M_{inj}, ET)$. In other words, the control unit 16 is configured for determining the flow rate (preferably, the mass flow rate) at the time instant t of the fuel flow entering or exiting the injector 14 on the basis of at least one value of the speed of sound in the fuel and a difference between first and second pressures acquired at different time instants, i.e. the first pressure is detected at a time instant t other than the time instant $t_0$ at which the second pressure is detected. By computing the flow rate at various time instants, the control unit 16 can thus compute the fuel mass that enters or exits the injector 14 by time integration of $G_{inj,in}$; it should also be noted that, in this calculation, t is preferably variable, whereas $t_0$ is fixed.

In order to estimate the speed of sound, the sensor means 2 may also comprise a temperature sensor configured for detecting the temperature $T_{inj}$ of the fluid: the speed of sound a can then be evaluated as a function of both said mean temperature and the value $p_{nom}$ by means of a function such as $a=a(p_{nom}, T_{inj})$, which may be included in the engine control information (e.g. by creating a suitable map stored in the memory means 162 of the control unit 16). The above description, made with reference to the use of a single pressure signal, can be used, for example, for controlling the quantity injected during the first pilot injection of a train of multiple injections, or for controlling the quantity injected during the post-injection for regenerating the particulate filter.

When $t > t_1^*$, it is also possible to detect the flow rate $G_{inj,in}$ by using two pressure signals ($p_{up}$ and $p_{down}$); to this end, the sensor means may comprise two pressure sensors, and the control unit 16 is configured for determining, by executing a set of instructions implementing a suitable algorithm, the instantaneous mass flow rate $G_{inj,in}(t)$ on the basis of the difference between the signal detected by the first sensor and the one detected by the second sensor. For example, the unit 16 may execute an algorithm that allows computing the instantaneous mass flow rate $G_{inj,in}(t)$ by exploiting the phenomena of propagation of pressure waves in the high-pressure circuit. Said algorithm will determine, the signals $p_{up}(t)$ and $p_{down}(t)$ being known, the instantaneous pressure gradient between the points where the two pressure sensors are installed, and then, by integration of the motion quantity equation of fluid dynamics and possibly by taking friction into account, will allow determining the time trend of the flow rate $G_{inj,in}$. During the process of integration with respect to time of the fluid motion quantity equation, it is necessary to know the flow rate $G_{inj,in}$ at the initial time instant $t_0$, designated as $G_0$. Such initial flow rate value is known and, in particular, can be considered to be null before the current signal is supplied to the injector. The following exemplary expression of $G_{inj,in}$ does not take friction into account (A is the inner cross-section of the duct whereon the two pressure sensors are installed):

$$G_{inj,in}(t) = G_0 + \frac{A}{l} \int_{t_0}^{t} \left[ p_{up}(t) - p_{down}(t) \right] dt \qquad (1')$$

As a matter of fact, the man skilled in the art may use a formula that is more complex or anyway different than the one shown above, without however departing from the teachings of the present invention.

It must be pointed out that, for the computation of the time integral of $G_{inj,in}(t)$ (i.e. of the mass flow rate entering the injector), the initial instant $t_0$ of the integration interval may coincide with the beginning of the electric energization signal sent to the solenoid of the injector 14, while the final instant $t_1$ may coincide with the instant at which the needle recloses the nozzle of said injector 14 at the end of the injection pulse (in which case $t_1$ may preferably be determined by means of needle closure sensors built into the injector, more preferably into the nozzle of said injector) or with the instant at which the hydraulic hammer due to the closing of the injector 14 is detected, preferably as a compression peak, by the sensor means 2, or, for small injections ($t_1 < t_1^*$), with the instant at which the pressure rises again abruptly after the depression peak caused by the injection (i.e. the minimum level point F of the distribution $p_{inj}(t)$ in Fig. 6) . The signals $t_0$ and $t_1$ may also coincide with the start and the end of the engine cycle or injection cycle (the latter being equal to the duration of the engine cycle divided by the number of injectors, i.e. the number of cylinders of the engine).

In other words, the control unit 16 may also be configured for computing the mass of the fuel flow injected by the injector 14 on the basis of a series of pressure differences determined within a certain time interval, wherein the beginning of said time interval preferably coincides with a time instant at which the injector 14 starts being energized, while the end of said time interval coincides with a time instant at which the control unit 16 detects an injection end event, such as, for example, the closing of the injector needle (which, as already mentioned, can be detected by a sensor positioned on the nozzle of said injector) or the hydraulic hammer caused by the closing of said injector 14 or, for small injections ($t_1 < t_1^*$), the minimum pressure after the depression peak caused by the injection (which, as aforementioned, can be detected by the sensor means 2). The initial and final instants of said time interval may also coincide with the start and the end of the engine cycle or injection cycle. When two pressure sensors are used, the speed of sound can also be determined by comparing the readings of $p_{up}(t)$ and $p_{down}(t)$, in particular by relating the length 1 that separates the two sensors with the time interval $\Delta t$ between, for example, the events A and A' or the events B and B'. In other words, the control unit may also be configured for determining a value of the speed of sound in the fuel on the basis of the time trend of the pressures detected by the first and second pressure sensors.

In order to maximize the value of $ET_{cr}$ and thus lengthen the time interval between $t_0$ and $t_1^*$, the sensor for measuring $p_{inj}$ should be installed as close as possible to the injector, and the connection pipe between the rail and the injector should be as long as possible.

In the presence of multiple injectors, the above-described control logic can be applied to each injector.

It should be noted that the control unit 16 may be configured for computing the pressure $p_{rail}^*$ (which is required by the unit 16 for controlling, via the pressure control means, the pressure $p_{rail}(t)$ in such a way as to keep it close to the nominal pressure $p_{nom}$) by computing the mean value or the maximum value of the pressure $p_{inj}(t)$ (or $p_{up}$ or $p_{down}$) detected by at least one of the pressure sensors comprised in the sensor means 2 installed along the injection duct 141.

In summary, the control unit 16 executes a method for controlling the quantity of fuel injected according to the invention that comprises the following steps:

a. an acquisition phase, wherein at least one property (e.g. the flow rate $G_{inj,in}$, a pressure or the like) of a fuel flow entering or exiting an injector 14 is detected through sensor means 2;
b. an error computation phase, wherein the computing means 161 compute at least one flow rate and/or mass of said fuel flow on the basis of said at least one detected property, and error information on the basis of at least the following information:

- reference information determined on the basis of the flow rate or mass $M_{inj}$ of fuel that the unit 16 wants to inject into the engine;
- feedback information comprising the flow rate $G_{inj}$ and/or the mass $M_{inj}^*$ of the fuel flow that the injector 14 injects into the engine, wherein said feedback information is determined on the basis of the flow rate $G_{inj,in}$ and/or the mass of the fuel flow entering said injector 14;

c. an activation phase, wherein said injector 14 is either activated or deactivated, via actuation means 164, so as to keep the amplitude of the injected mass error information below a predefined threshold, which is preferably lower than 5% or 1 mg, more preferably lower than 3% or 0.5 mg.

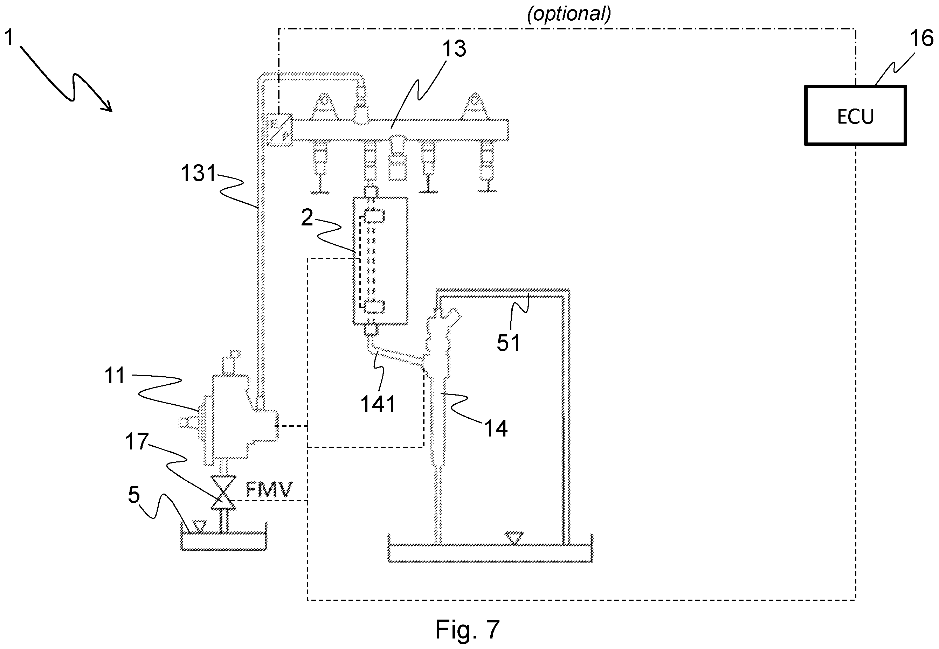

Also with reference to Fig. 7, the following will describe a variant wherein the pressure control means comprise, as an alternative to or in combination with the pressure control valve 15, a flow-rate control valve 17 (also called fuel metering valve - FMV) positioned upstream of the injection pump 11, i.e. on the intake duct of said pump 11. Thus, the flow-rate control valve 17 operates at a lower pressure than the pressure control valve 15, thereby making the latter easier to manufacture and less subject to fuel leakage; said flow-rate control valve 17 can vary the fuel flow rate entering said pump 11 and preferably has a hydraulic configuration that allows it to dampen the pressure oscillations caused by the change in the flow rate of the fuel flowing therein.

More in detail, the flow-rate control valve 17 actuated by the control unit 16 controls the flow rate taken in by the pump in such a way that the latter will deliver a fuel mass quantity per engine cycle (or part of engine cycle) which is as close as possible to the quantity of fuel discharged by the injector(s) 14 within the same time interval. The difference $\varepsilon_p$ between the value $p_{rail}^*$ and the nominal value $p_{nom}$ specified in the engine maps constitutes the input of a controller (which is similar to the controller R2 shown in Fig. 4), the output signal of which controls, in this case, the outflow section of the FMV valve. It must be pointed out that, if multiple injectors 14 are present as in most engines, the sensor means 2 for detecting the flow rate entering the injector 14, shown in Fig. 1 or 7, can be mounted on the high-pressure injection ducts feeding each injector; as an alternative to this solution, said sensor means 2 may be present in just one injection duct 141 that feeds the injector 14. In such a case, the fuel quantity is controlled for one injector only, while for the other ones an energization time compensation law can be assumed which is similar or equal to the one employed for the controlled injector. In this case, the number of sensor means 2 in the injection system will be reduced, thus simplifying the implementation of the invention on engines currently in production or installed in vehicles already in circulation, since it will not be necessary to re-engineer and/or replace all injection ducts currently in production and/or already installed.

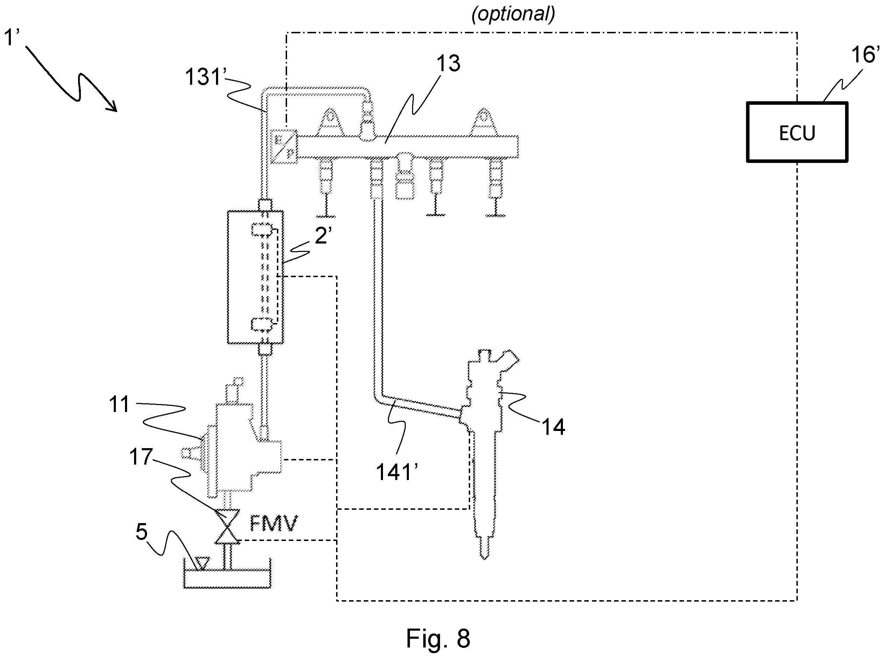

A first variant is shown in Fig. 8, which illustrates the injection system 1'; for simplicity, the following description will only highlight those parts which make this and the next variants different from the above-described main embodiment; for the same reason, wherever possible the same reference numerals, with the addition of one or more apostrophes, will be used for indicating structurally or functionally equivalent elements in the new variants.

The injection system 1' differs from the injection system 1 of the previously described embodiment in that the sensor means 2', which are similar to the sensor means 2 of the previous embodiment, are installed along a supply duct 131' (similar to the duct 131) that feeds fuel to the injection duct 13, as opposed to an injection duct 141', which in this embodiment is preferably made in accordance with the prior art.

In fact, it is possible to detect the input (mass) flow rate $G_{inj,in}$ entering the injector 14 between the time instants $t_0$ and $t_1$, whether defined beforehand or otherwise, by configuring the computing means 161 for the execution of a set of instructions implementing the following differential equation (which refers to the drawing of Fig. 8):

$$G_{inj,in}(t) = G_{pump}(t) - \frac{V_{rail}}{a^2} \frac{dp_{rail}}{dt} \qquad (2)$$

where $G_{pump}$ is the instantaneous flow rate of the fuel flow being pumped by the injection pump 11, and where $G_{pump}$ is determined by the control unit 16' on the basis of at least one piece of measurement information detected by the sensor means 2' (e.g. the signals $p_{up}(t)$ and $p_{down}(t)$), the parameter $V_{rail}$ is the inner volume of the fuel rail 13, and a is the speed of sound in the fuel contained in the rail, which can be obtained starting from the phase difference between the pressure signals $p_{up}(t)$ and $p_{down}(t)$ detected by the sensor means 2' installed along the delivery duct of the injection pump 11. As an alternative, a can be estimated on the basis of the knowledge of $p_{nom}$ and of the mean temperature $T_{pump}$ detected by a temperature sensor comprised in the sensor means 2'. Knowing $G_{pump}(t)$ and $p_{rail}(t)$, possibly measured by a piezoresistive or piezoelectric pressure sensor integrated into the rail, it is possible to determine $G_{inj,in}(t)$ by means of the equation (2). In other words, the control unit 16' is also configured for executing the following operations:

- determining one or more flow rates (i.e. the time trend) of a fuel flow being pumped by the injection pump 11 on the basis of the time trend of the pressures detected by the first and second pressure sensors positioned upstream of the fuel rail 13;

- determining one or more flow rates and/or masses (i.e. the time trend) of the fuel flow entering or exiting the injector 14 also on the basis of the following variables:

  • said one or more flow rates of the fuel flow being pumped by the injection pump 11;
  • the time trend of the pressure in the fuel rail 13, i.e. the derivative of $p_{rail}$, where $p_{rail}$ is determined, for example, on the basis of the first harmonics of a Fourier series development of the signal coming from the first and/or second pressure sensor, or is detected by means of a dedicated pressure sensor preferably positioned in the fuel rail 13;
  • the inner volume of said fuel rail 13, optionally increased by adding the inner volumes of the inert injectors and of the respective supply ducts;
  • the speed of sound in the fuel.

In this embodiment, it is advantageously possible to take into account the presence of a plurality of injectors and respective injection ducts, i.e. the fact that, when one injector is in operation, the other injectors remain inert. This can be achieved by increasing the volume $V_{rail}$ by a quantity that depends on the values of the inner fluid volumes of the inert injectors and of their respective supply ducts 141'. In this manner, the invention can be applied to engines already produced or even to engines installed in vehicles already in circulation, thus improving the efficiency and exhaust emissions of such engines.

The computation of $G_{pump}$ starting from the signals of the two pressure sensors can be made as previously explained, if the value of the initial flow rate in the duct 131', i.e. the flow rate at the instant $t_0$, is known. If said initial flow rate is not known a priori, and in particular cannot be considered to be null, the trend of $G_{pump}(t)$ can be determined by detecting the mean flow rate in the duct 131' over time. This can be done by measuring the low-pressure flow rate on the intake and delivery sides of the pump (delivery occurring in the duct 51'), e.g. by using Coriolis-type meters; in fact, the difference between such flow rates will coincide in modulus with the mean value of the flow rate in the duct 131' (this processing can be carried out by the control unit 16').

In order to detect the input fuel flow rate $G_{inj,in}$ entering the injector 14, the control unit 16' (which is similar to the unit 16 of the previous embodiment) is configured for executing the following steps:

- detecting the time trend of the rail pressure $p_{rail}$ via the sensor means 2' as described for the previous embodiment, or detecting it by means of a dedicated sensor positioned in the fuel rail 13, and then computing $p_{rail}*$;
- determining, on the basis of at least one piece of measurement information detected by the sensor means 2', the (mass) flow rate of pumped fuel $G_{pump}$ flowing through the injection pump 11 as already described for the previous embodiment;
- computing, via the computing means 161 (which are preferably configured for executing a set of instructions implementing the relation expressed by the equation (2)), the input (mass) flow rate $G_{inj,in}$ entering the injector 14 on the basis of the detected rail pressure $p_{rail}$ and pumped fuel flow rate $G_{pump}$.

The control unit 16' can thus integrate $G_{inj,in}(t)$ between the instants $t_0$ and $t_1$ in order to calculate the mass $M_{inj,in}$ and then implement the control strategy already described for the previous embodiment, i.e. always taking into account the bond existing between $M_{inj,in}$ and $M_{inj}$ through one of the relations $f(M_{inj})$, $f(M_{inj}, p_{nom})$ or $f(M_{inj}, ET)$.

It must be pointed out that, in the presence of multiple injectors operating one at a time, it is possible to compute $M_{inj,in}$ for each one of them by using the equation shown in formula 2, since it can be assumed that the whole mass that comes out of the fuel rail 13 within said time interval will be conveyed into the pipe that feeds the electrically energized injector (the other injectors will be inert). Optionally, the parameter $V_{rail}$ may also include, in addition to the inner volume of the rail 13, the inner volumes of the inert injectors and of their respective ducts 141'.

This embodiment of the invention has the advantage that the fuel mass injected by all injectors can be controlled through the use of only two pressure transducers installed in the supply duct 131'.

If a pressure control valve (i.e. a PCV valve 15 like the one described with reference to the previous embodiment) is present in combination with or as an alternative to the flow-rate control valve 17, formula 2 can be modified as follows:

$$G_{inj,in}(t) = G_{pump}(t) - \frac{V_{rail}}{a^2} \frac{dp_{rail}}{dt} - G_{PCV}(t) \qquad (2')$$

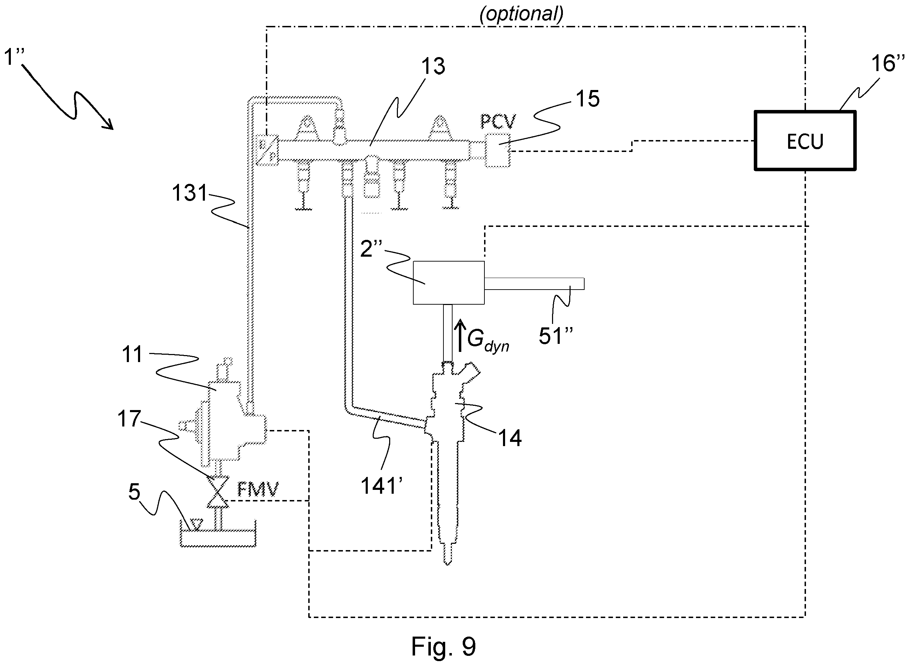

where $G_{PCV}$ is the instantaneous mass flow rate through the pressure control valve 15. This flow rate can be computed, for example, by the control unit 16' by executing a set of instructions implementing a model receiving as input the signal $act_{PCV}$ and the value of $p_{nom}$, or may be detected by a low-pressure mass flow meter (e.g. a Coriolis-effect meter) installed downstream of the delivery duct of the pressure control valve $PCV$, i.e. in low-pressure conditions that will considerably simplify the implementation of the invention on engines currently in production or installed in vehicles already in circulation. Therefore, the control unit 16' can be configured for executing a set of instructions implementing the above-described formula 2', so as to compute the input (mass) flow rate $G_{inj,in}$ entering the injector 14 on the basis of the rail pressure $p_{rail}$, of the pumped fuel flow rate $G_{pump}$, and preferably of an estimated value of the speed of sound a. Also with reference to Fig. 9, the following will describe a third embodiment of the invention, wherein sensor means 2" (similar to the sensor means of the previously described embodiments) are installed downstream of the pilot valve of the injector 14, i.e. along the fuel recovery duct 51", thus making this embodiment of the invention particularly interesting for use in an injection system 1" comprising at least one indirectly actuated injector 14 (i.e. an injector equipped with a pilot valve) and a control unit 16" (similar to the units 16 and 16' already described) appropriately configured for controlling, via the sensor means 2", the quantity of fuel injected by said injector 14.

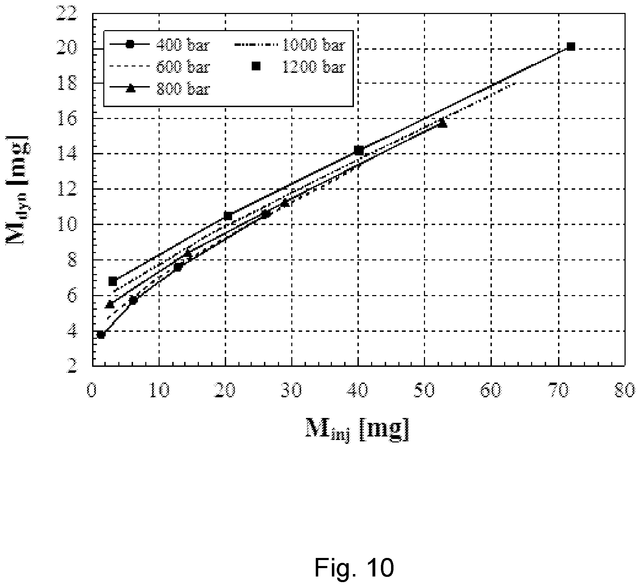

The sensor means 2" preferably comprise a sufficiently accurate instantaneous low-pressure flow meter (e.g. a Coriolis-effect meter, a flow meter like those previously described, or the like) installed along the fuel recovery duct 51". In this manner, the sensor means 2" can detect a flow rate $G_{dyn}$ (the subscript "dyn" indicates the dynamic leakage) that the computing means 161 can integrate along the time interval having a duration approximately equal to $ET$ starting from $t_0$, as previously defined, thereby obtaining a fuel mass $M_{dyn}$ discharged from the pilot stage of the injector 14 during said interval. Also with reference to Fig. 10, it can be noticed that the discharged fuel mass $M_{dyn}$ is correlated to the fuel mass $M_{inj}$ injected by the injector 14 as the nominal rail pressure $p_{nom}$ changes, i.e. according to a relation $M_{dyn}=f(M_{inj}, p_{nom})$; the engine control information may therefore comprise the relation $M_{dyn}=f(M_{inj}, p_{nom})$ encoded in an appropriate format (e.g. as one or more maps). Said relation can be obtained by taking preliminary measurements on the injection system 1 (prior to mounting it on the engine), preferably by using a hydraulic bench configured for measuring the fuel flow rates injected and discharged from the pilot stage of the injector 14 (for the flow recirculated from the pilot stage, a Moehwald KMM meter can be used), or with the aid of numerical models modelling said injection system 1.

In combination with or as an alternative to the nominal rail pressure $p_{nom}$, it is also possible to diagram the bond between $M_{dyn}$ and $M_{inj}$ with respect to the energization time $ET$, thereby obtaining relations parameterized as a function of $ET$ according to the functional bond $M_{dyn}=f(M_{inj}, ET)$. One will simply have to choose the most appropriate functional form between $M_{dyn}=f(M_{inj}, p_{nom})$ and $M_{dyn}=f(M_{inj}, ET)$ for modelling the behaviour of the injector 14 in the particular injection system 1".

Although this description has tackled some of the possible variants of the invention, it will be apparent to those skilled in the art that other embodiments may also be implemented, as long as these embodiments fall within the scope defined by the appended claims.

**Claims**

1. System (1') for injecting fuel into an internal combustion engine, comprising

   - at least one injector (14) adapted to inject fuel into said internal combustion engine,
   - an injection duct (141') adapted to feed said injector (14) with fuel,
   - a fuel rail (13) in fluidic communication with said injector (14) via said injection duct (141'),
   - an injection pump (11) having the delivery side in fluidic communication with said fuel rail (13), and adapted to pump the fuel towards said injector (14),
   - a control unit (16') capable of controlling the activation of said injector (14),
   - a supply duct (131') that puts the delivery side of the injection pump (11) in fluidic communication with the fuel rail (13),

   **characterized in that**
   it comprises sensor means (2') comprising a first pressure sensor at least partly positioned in the supply duct (131'), and a second pressure sensor at least partly positioned in the same duct that houses the first pressure sensor, in a position which is different from that of said first pressure sensor, wherein said control unit (16') is configured for

   - determining, on the basis of said at least one property detected by said sensor means (2'), at least one flow rate and/or mass of the fuel flow entering said injector (14), and
   - activating or deactivating said injector (14) on the basis of the flow rate and/or mass of said fuel flow, so as to control the flow rate and/or the mass of fuel injected into the engine by the injector (14).

2. System (1') according to claim 1, wherein the control unit (16') is configured for determining the flow rate and/or the mass of the fuel flow entering the injector (14) also on the basis of the time trend of a pressure signal generated by the first pressure sensor.

3. System (1') according to claim 2, wherein the control unit (16') is configured for determining the flow rate and/or the mass of the fuel flow entering the injector (14) on the basis of at least one value of the speed of sound in the fuel and at least one difference between a first pressure and a second pressure detected by said first pressure sensor, wherein the first pressure is detected at a time instant other than the time instant at which the second pressure is detected.

4. System (1') according to any one of claims 1 to 3, wherein the control unit (16') is configured for determining the flow rate and/or the mass of the fuel flow entering the injector (14) also on the basis of at least one pressure difference computed between a first pressure, detected by the first sensor, and a second pressure, detected by the second sensor.

5. System (1') according to claim 4, wherein the control unit (16') is configured for computing the mass of the fuel flow entering the injector (14) also on the basis of a series of pressure differences determined within a time interval, wherein the beginning of said time interval coincides with a time instant at which the injector (14) starts being energized or an engine cycle or an injection cycle begins, and wherein the end of said time interval coincides with a time instant at which the control unit (16') detects an injection end event or an injection cycle or an engine cycle ends.

6. System (1,1') according to any one of claims 1 to 5, wherein the control unit (16') is also configured for

   - determining a value of the speed of sound in the fuel on the basis of the time trend of the pressures detected by the first and second pressure sensors, and
   - determining the flow rate and/or the mass of the fuel flow entering the injector (14) also on the basis of said value of the speed of sound.

7. System (1') according to claim 6, wherein the control unit (16') is also configured for

   - determining at least one flow rate of a fuel flow being pumped by the injection pump (11) on the basis of the time trend of the pressures detected by the first and second pressure sensors positioned upstream of the fuel rail (13),
- determining said at least one flow rate and/or mass of the fuel flow entering or exiting the injector (14) also on the basis of

• said at least one flow rate of the fuel flow being pumped by the injection pump (11),
• the time trend of the pressure inside the fuel rail (13), determined on the basis of the time trend of the pressure signal generated by the first and/or second pressure sensors or detected by means of a third pressure sensor positioned in the fuel rail (13), and
• the inner volume of said fuel rail (13).

8. System (1') according to any one of claims 1 to 7, comprising pressure control means (15,17) in signal communication with the control unit (16'), wherein the control unit (16') is also configured for

- determining a pressure ($p_{rail}$*) in the fuel rail (13) on the basis of the time trend of the pressure signal generated by the sensor means (2'), or detecting said pressure ($p_{rail}$*) by means of a third pressure sensor positioned in the fuel rail (13),
- operating said pressure control means (15,17) on the basis of said pressure ($p_{rail}$*) , so as to keep the pressure in the fuel rail (13) close to a nominal pressure value ($p_{nom}$).

9. System (1') according to claims 7 and 8, wherein the control unit (16') is also configured for

- determining at least one flow rate of a fuel flow through the pressure control means (15) on the basis of the configuration of said pressure control means (15), or detecting said at least one flow rate by means of a mass flow meter,
- determining said at least one flow rate and/or mass of the fuel flow entering or exiting the injector (14) also on the basis of said flow rate of the fuel flow through the pressure control means (15).

10. System (1,1') according to any one of claims 1 to 9, wherein the sensor means (2,2') comprise also a temperature sensor configured for detecting a fuel temperature, and wherein the control unit (16) is also configured for

- determining, on the basis of said fuel temperature, a value of the speed of sound in the fuel, and
- determining the flow rate and/or the mass of the fuel flow entering the injector (14) also on the basis of said value of the speed of sound.

11. Apparatus (16') for controlling the quantity of fuel that can be injected into an internal combustion engine by means of a system (1') according to any one of claims 1 to 10, comprising

- actuation means (164) adapted to generate at least one injection signal ($act_{inj}$) that can actuate at least one injector (14) in fluidic communication with a fuel rail (13) via an injection duct (141),

**characterized in that**
it also comprises

- acquisition means (163) adapted to acquire at least one piece of measurement information detected by sensor means (2') positioned upstream of the fuel rail (13),
- processing and control means (161) in signal communication with said acquisition means (163) and said actuation means (164), and configured for

• determining, on the basis of the measurement information, at least one flow rate and/or mass of a fuel flow entering said injector (14), and
• activating or deactivating said injector (14), by means of said actuation means (164), on the basis of the determined flow rate and/or mass of said fuel flow, so as to control the flow rate and/or the mass of fuel injected into the engine by the injector (14).

12. Method for controlling the quantity of fuel injected into an internal combustion engine by means of a system (1') according to any one of claims 1 to 10,
**characterized in that** it comprises

a. an acquisition phase, wherein at least one property of a fuel flow entering an injector (14) is detected through sensor means (2'),

b. a computation phase, wherein the computing means (161) compute at least one flow rate and/or mass of said fuel flow on the basis of said at least one detected property, and error information on the basis of at least

- reference information determined on the basis of a flow rate or a mass ($M_{inj}$) of fuel to be injected into the engine,
- feedback information comprising a flow rate and/or a mass ($M_{inj}$*) of a fuel flow being injected into the engine by the injector (14), wherein said feedback information is determined on the basis of the flow rate and/or mass of said fuel flow entering said injector (14),

c. an activation phase, wherein said injector (14) is either activated or deactivated, via the actuation means (164), so as to keep the amplitude of the error information below a threshold.

13. Computer program product which can be loaded into the memory of an electronic computer, and which comprises portions of software code for executing the phases of the method according to claim 12.


**Patentansprüche**

1. System (1') zum Einspritzen von Kraftstoff in einen Verbrennungsmotor, umfassend

- mindestens eine Einspritzdüse (14), die dazu geeignet ist, Kraftstoff in den Verbrennungsmotor einzuspritzen,
- eine Einspritzleitung (141'), die geeignet ist, die Einspritzdüse (14) mit Kraftstoff zu versorgen,
- eine Kraftstoffleiste (13), die über die Einspritzleitung (141') mit der Einspritzdüse (14) in Fluidverbindung steht,
- eine Einspritzpumpe (11), deren Druckseite in Fluidverbindung mit der Kraftstoffleiste (13) steht und die dazu geeignet ist, den Kraftstoff zu der Einspritzdüse (14) zu pumpen,
- eine Steuereinheit (16'), die in der Lage ist, die Aktivierung der Einspritzdüse (14) zu steuern,
- eine Zuführleitung (131'), welche die Druckseite der Einspritzpumpe (11) mit der Kraftstoffleiste (13) in Fluidverbindung setzt,

**dadurch gekennzeichnet, dass**
es Sensormittel (2') umfasst, die einen ersten Drucksensor, der zumindest zum Teil in der Zuführleitung (131') positioniert ist, und einen zweiten Drucksensor, der zumindest zum Teil in derselben Leitung positioniert ist, welche den ersten Drucksensor unterbringt, in einer Position, die sich von jener des ersten Drucksensors unterscheidet, umfasst, wobei die Steuereinheit (16') ausgestaltet ist, um

- auf Grundlage zumindest einer Eigenschaft, die von den Sensormitteln (2') erfasst wird, mindestens eine Flussrate und/oder Masse des Kraftstoffflusses, der in die Einspritzdüse (14) eintritt, zu bestimmen, und
- die Einspritzdüse (14) auf Grundlage der Flussrate und/oder Masse des Kraftstoffflusses zu aktivieren oder zu deaktivieren, um die Flussrate und/oder di Masse von Kraftstoff, der durch die Einspritzdüse (14) in den Motor eingespritzt wird, zu steuern.

2. System (1') nach Anspruch 1, wobei die Steuereinheit (16') ausgestaltet ist, um die Flussrate und/oder die Masse des Kraftstoffflusses, der in die Einspritzdüse (14) eintritt, auch auf Grundlage des Zeittrends eines Drucksignals, das von dem ersten Drucksensor erzeugt wird, zu bestimmen.

3. System (1') nach Anspruch 2, wobei die Steuereinheit (16') ausgestaltet ist, um die Flussrate und/oder die Masse des Kraftstoffflusses, der in die Einspritzdüse (14) eintritt, auf Grundlage zumindest eines Werts der Schallgeschwindigkeit in dem Kraftstoff und zumindest einer Differenz zwischen einem ersten Druck und einem zweiten Druck, die von dem ersten Drucksensor erfasst werden, zu bestimmen, wobei der erste Druck an einem Zeitpunkt erfasst wird als dem Zeitpunkt, an dem der zweite Druck erfasst wird.

4. System (1') nach einem der Ansprüche 1 bis 3, wobei die Steuereinheit (16') ausgestaltet ist, um die Flussrate und/oder die Masse des Kraftstoffflusses, der in die Einspritzdüse (14) eintritt, auch auf Grundlage von zumindest einer Druckdifferenz zu bestimmen, die zwischen einem ersten Druck, der von dem ersten Sensor erfasst wird, und einem zweiten Druck, der von dem zweiten Sensor erfasst wird, berechnet wird.

**5.** System (1') nach Anspruch 4, wobei die Steuereinheit (16') ausgestaltet ist, um die Masse des Kraftstoffflusses, der in die Einspritzdüse (14) eintritt, auch auf Grundlage einer Reihe von Druckdifferenzen zu berechnen, die innerhalb eines Zeitintervalls bestimmt werden, wobei ein Beginn des Zeitintervalls mit einem Zeitpunkt zusammenfällt, an welchem die Einspritzdüse (14) aktiviert zu werden beginnt, oder ein Motortakt oder ein Einspritztakt beginnt, und wobei das Ende des Zeitintervalls mit einem Zeitpunkt zusammenfällt, an welchem die Steuereinheit (16') ein Einspritzende-Ereignis erfasst oder ein Einspritztakt oder ein Motortakt endet.

**6.** System (1, 1') nach einem der Ansprüche 1 bis 5, wobei die Steuereinheit (16') auch ausgestaltet ist, um

- einen Wert der Schallgeschwindigkeit in dem Kraftstoff auf Grundlage des Zeittrends der Drücke, die von dem ersten und dem zweiten Sensor erfasst werden, zu bestimmen, und
- die Flussrate und/oder die Masse des Kraftstoffflusses, der in die Einspritzdüse (14) eintritt, auch auf Grundlage des Werts der Schallgeschwindigkeit zu bestimmen.

**7.** System (1') nach Anspruch 6, wobei die Steuereinheit (16') auch ausgestaltet ist, um

- zumindest eine Flussrate eines Kraftstoffflusses, der von der Einspritzpumpe (11) gepumpt wird, auf Grundlage des Zeittrends der Drücke zu bestimmen, die von dem ersten und dem zweiten Sensor erfasst werden, die stromaufwärts der Kraftstoffleiste (13) positioniert sind,
- zumindest eine Flussrate und/oder Masse des Kraftstoffflusses, der in die Einspritzdüse (14) eintritt oder daraus austritt, auch auf Grundlage von

  • der zumindest einen Flussrate des Kraftstoffflusses, der von der Einspritzpumpe (11) gepumpt wird,
  • dem Zeittrend des Drucks innerhalb der Kraftstoffleiste (13), bestimmt auf Grundlage des Zeittrends des von dem ersten und/oder zweiten Drucksensor erzeugten oder mittels eines dritten Drucksensors, der in der Kraftstoffleiste (13) positioniert ist, erfassten Drucksignals, und
  • dem Innenvolumen der Kraftstoffleiste (13) zu bestimmen.

**8.** System (1') nach einem der Ansprüche 1 bis 7, umfassend Drucksteuermittel (15, 17) in Signalkommunikation mit der Steuereinheit (16'), wobei die Steuereinheit (16') auch ausgestaltet ist, um

- einen Druck ($p_{rail}$*) in der Kraftstoffleiste (13) auf Grundlage des Zeittrends des Drucksignals, das von den Sensormitteln (2') erzeugt wird, zu bestimmen, oder den Druck ($p_{rail}$*) mittels eines dritten Drucksensors zu erfassen, der in der Kraftstoffleiste (13) positioniert ist,
- die Drucksteuermittel (15, 17) auf Grundlage des Drucks ($p_{rail}$*) so zu betätigen, dass der Druck in der Kraftstoffleiste (13) nahe an einem Nenndruckwert ($p_{nom}$) gehalten wird.

**9.** System (1') nach den Ansprüchen 7 und 8, wobei die Steuereinheit (16') auch ausgestaltet ist, um

- zumindest eine Flussrate eines Kraftstoffflusses durch die Drucksteuermittel (15) auf Grundlage der Konfiguration der Drucksteuermittel (15) zu bestimmen, oder die zumindest eine Flussrate mittels eines Massendurchflussmessgeräts zu erfassen,
- die zumindest eine Flussrate und/oder Masse des Kraftstoffflusses, der in die Einspritzdüse (14) eintritt oder daraus austritt, auch auf Grundlage der Flussrate des Kraftstoffflusses durch die Drucksteuermittel (15) zu bestimmen.

**10.** System (1, 1') nach einem der Ansprüche 1 bis 9, wobei die Sensormittel (2, 2') auch einen Temperatursensor umfassen, der ausgestaltet ist, um eine Kraftstofftemperatur zu erfassen, und wobei die Steuereinheit (16) auch ausgestaltet ist, um

- auf Grundlage der Kraftstofftemperatur einen Wert der Schallgeschwindigkeit in dem Kraftstoff zu bestimmen, und
- die Flussrate und/oder die Masse des Kraftstoffflusses, der in die Einspritzdüse (14) eintritt, auch auf Grundlage des Werts der Schallgeschwindigkeit zu bestimmen.

**11.** Vorrichtung (16') zur Steuerung der Menge an Kraftstoff, die in einen Verbrennungsmotor eingespritzt werden kann, mittels eines Systems (1') nach einem der Ansprüche 1 bis 10, umfassend

- Betätigungsmittel (164), die dazu geeignet sind, mindestens ein Einspritzsignal (act$_{inj}$) zu erzeugen, das zumindest eine Einspritzdüse (14), die mit einer Kraftstoffleiste (13) über eine Einspritzleitung (141) in Fluidverbindung steht, betätigen kann,

**dadurch gekennzeichnet, dass**
sie auch umfasst:

- Ermittlungsmittel (163), die dazu geeignet sind, mindestens eine einzelne Messinformation zu ermitteln, die von stromaufwärts der Kraftstoffleiste (13) angeordneten Sensormitteln (2') erfasst wird,
- Verarbeitungs- und Steuermittel (161) in Signalkommunikation mit den Ermittlungsmitteln (163) und den Betätigungsmitteln (164), und die ausgestaltet sind, um

• auf Grundlage der Messinformation zumindest eine Flussrate und/oder Masse von Kraftstoff, der in die Einspritzdüse (14) eintritt, zu bestimmen, und
• die Einspritzdüse (14) auf Grundlage der bestimmten Flussrate und/oder Masse des Kraftstoffflusses durch die Betätigungsmittel (164) zu aktivieren oder zu deaktivieren, um die Flussrate und/oder die Masse von Kraftstoff, der durch die Einspritzdüse (14) in den Motor eingespritzt wird, zu steuern.

12. Verfahren zur Steuerung der Menge an Kraftstoff, die in einen Verbrennungsmotor eingespritzt werden kann, mittels eines Systems (1') nach einem der Ansprüche 1 bis 10,
**dadurch gekennzeichnet, dass** es umfasst:

a. eine Ermittlungsphase, in welcher zumindest eine Eigenschaft eines Kraftstoffflusses, der in eine Einspritzdüse (14) eintritt, durch Sensormittel (2') erfasst wird,
b. eine Berechnungsphase, in welcher Berechnungsmittel (161) zumindest eine Flussrate und/oder Masse des Kraftstoffflusses auf Grundlage der zumindest einen erfassten Eigenschaft, und Fehlerinformationen auf Grundlage von zumindest

- Referenzinformationen, die auf Grundlage einer Flussrate oder einer Masse ($M_{inj}$) von Kraftstoff, der in den Motor eingespritzt werden soll,
- Rückkopplungs-Informationen, die eine Flussrate und/oder eine Masse ($M_{inj}$*) eines Kraftstoffflusses, der in den Motor durch die Einspritzdüse (14) eingespritzt wird, berechnen, wobei die Rückkopplungs-Informationen auf Grundlage der Flussrate und/oder Masse des Kraftstoffflusses, der in die Einspritzdüse (14) eintritt, bestimmt wird,

c. eine Aktivierungsphase, in welcher die Einspritzdüse (14) über die Betätigungsmittel (164) entweder aktiviert oder deaktiviert wird, um die Amplitude der Fehlerinformationen unterhalb einer Schwelle zu halten.

13. Computerprogrammprodukt, das in den Speicher eines elektronischen Computers geladen werden kann, und welches Teile von Software-Code zur Ausführung der Phasen des Verfahrens nach Anspruch 12 umfasst.


**Revendications**

1. Système (1') pour injecter du carburant dans un moteur à combustion interne, comprenant

- au moins un injecteur (14) conçu pour injecter du carburant dans ledit moteur à combustion interne,
- un conduit d'injection (141') conçu pour alimenter ledit injecteur (14) en carburant,
- un rail de carburant (13) en communication fluidique avec ledit injecteur (14) par le biais dudit conduit d'injection (141'),
- une pompe d'injection (11) ayant le côté de distribution en communication fluidique avec ledit rail de carburant (13) et conçue pour pomper le carburant vers ledit injecteur (14),
- une unité de commande (16') qui peut commander l'activation dudit injecteur (14),
- un conduit d'alimentation (131') qui met le côté de distribution de la pompe d'injection (11) en communication fluidique avec le rail de carburant (13),

**caractérisé en ce que**
il comprend des moyens de capteur (2') comprenant un premier capteur de pression positionné au moins partiellement dans le conduit d'alimentation (131') et un deuxième capteur de pression positionné au moins partiellement dans le même conduit qui loge le premier capteur de pression, à une position qui est différente de celle dudit premier capteur pression, dans lequel ladite unité de commande (16') est configurée pour

- déterminer, sur la base de ladite au moins une propriété détectée par lesdits moyens de capteur (2'), au moins un débit et/ou une masse de l'écoulement de carburant entrant dans ledit injecteur (14) et
- activer ou désactiver ledit injecteur (14) sur la base du débit et/ou de la masse dudit écoulement de carburant de sorte à réguler le débit et/ou la masse de carburant injecté dans le moteur par l'injecteur (14).

2. Système (1') selon la revendication 1, dans lequel l'unité de commande (16') est configurée pour déterminer le débit et/ou la masse de l'écoulement de carburant entrant dans l'injecteur (14) également sur la base de la tendance temporelle d'un signal de pression généré par le premier capteur de pression.

3. Système (1') selon la revendication 2, dans lequel l'unité de commande (16') est configurée pour déterminer le débit et/ou la masse de l'écoulement de carburant entrant dans l'injecteur (14) sur la base d'au moins une valeur de la vitesse d'un son dans le carburant et d'au moins une différence entre une première pression et une deuxième pression détectées par ledit premier capteur de pression, dans lequel la première pression est détectée à un moment autre que le moment où la deuxième pression est détectée.

4. Système (1') selon l'une quelconque des revendications 1 à 3, dans lequel l'unité de commande (16') est configurée pour déterminer le débit et/ou la masse de l'écoulement de carburant entrant dans l'injecteur (14) également sur la base d'au moins une différence de pression calculée entre une première pression, détectée par le premier capteur, et une deuxième pression, détectée par le deuxième capteur.

5. Système (1') selon la revendication 4, dans lequel l'unité de commande (16') est configurée pour calculer la masse de l'écoulement de carburant entrant dans l'injecteur (14) également sur la base d'une série de différences de pression déterminées dans un intervalle de temps, dans lequel le début dudit intervalle de temps coïncide avec un moment où l'injecteur (14) commence à être alimenté, ou un cycle de moteur ou un cycle d'injection commence, et dans lequel la fin dudit intervalle de temps coïncide avec un moment où l'unité de commande (16') détecte un événement de fin d'injection ou un cycle d'injection ou un cycle de moteur prend fin.

6. Système (1, 1') selon l'une quelconque des revendications 1 à 5, dans lequel l'unité de commande (16') est également configurée pour

- déterminer une valeur de la vitesse du son dans le carburant sur la base de la tendance temporelle des pressions détectées par les premier et deuxième capteurs de pression et
- déterminer le débit et/ou la masse de l'écoulement de carburant entrant dans l'injecteur (14) également sur la base de ladite valeur de la vitesse du son.

7. Système (1') selon la revendication 6, dans lequel l'unité de commande (16') est également configurée pour

- déterminer au moins un débit d'un écoulement de carburant qui est pompé par la pompe d'injection (11) sur la base de la tendance temporelle des pressions détectées par les premier et deuxième capteurs de pression positionnés en amont du rail de carburant (13),
- déterminer ledit au moins un débit et/ou la masse de l'écoulement de carburant entrant dans l'injecteur (14), ou sortant de celui-ci, également sur la base

  • dudit au moins un débit de l'écoulement de carburant qui est pompé par la pompe d'injection (11),
  • de la tendance temporelle de la pression à intérieur du rail de carburant (13), déterminée sur la base de la tendance temporelle du signal de pression généré par le premier et/ou le deuxième capteur de pression ou détecté au moyen d'un troisième capteur de pression positionné dans le rail de carburant (13) et
  • le volume interne dudit rail de carburant (13).

8. Système (1') selon l'une quelconque des revendications 1 à 7, comprenant des moyens de régulation de pression (15, 17) en communication de signal avec l'unité de commande (16'), dans lequel l'unité de commande (16') est également configurée pour

- déterminer une pression ($p_{rail}$*) dans le rail de carburant (13) sur la base de la tendance temporelle du signal de pression généré par les moyens de capteur (2') ou détecter ladite pression ($p_{rail}$*) au moyen d'un troisième capteur de pression positionné dans le rail de carburant (13),
- faire fonctionner lesdits moyens de régulation de pression (15, 17) sur la base de ladite pression ($p_{rail}$*) de sorte à garder la pression dans le rail de carburant (13) proche d'une valeur de pression nominale ($p_{nom}$).

**9.** Système (1') selon les revendications 7 et 8, dans lequel l'unité de commande (16') est également configurée pour

- déterminer au moins un débit d'un écoulement de carburant à travers les moyens de régulation de pression (15) sur la base de la configuration desdits moyens de régulation de pression (15) ou détecter ledit au moins un débit au moyen d'un débitmètre massique,
- déterminer ledit au moins un débit et/ou masse de l'écoulement de carburant entrant dans l'injecteur (14), ou sortant de celui-ci, également sur la base dudit débit de l'écoulement de carburant à travers les moyens de régulation de pression (15).

**10.** Système (1, 1') selon l'une quelconque des revendications 1 à 9, dans lequel les moyens de capteur (2, 2') comprennent également un capteur de température configuré pour détecter une température de carburant et dans lequel l'unité de commande (16) est également configurée pour

- déterminer, sur la base de ladite température de carburant, une valeur de la vitesse du son dans le carburant et
- déterminer le débit et/ou la masse de l'écoulement de carburant entrant dans l'injecteur (14) également sur la base de ladite valeur de la vitesse du son.

**11.** Appareil (16') pour réguler la quantité de carburant qui peut être injectée dans un moteur à combustion interne au moyen d'un système (1') selon l'une quelconque des revendications 1 à 10, comprenant

- des moyens d'actionnement (164) conçus pour générer au moins un signal d'injection ($act_{inj}$) qui peut actionner au moins un injecteur (14) en communication fluidique avec un rail de carburant (13) par le biais d'un conduit d'injection (141),

**caractérisé en ce que**
il comprend également

- des moyens d'acquisition (163) conçus pour acquérir au moins un élément d'informations de mesure détecté par des moyens de capteur (2') positionnés en amont du rail de carburant (13),
- des moyens de traitement et de commande (161) en communication de signal avec lesdits moyens d'acquisition (163) et lesdits moyens d'actionnement (164) et configurés pour

    • déterminer, sur la base des informations de mesure, au moins un débit et/ou une masse d'un écoulement de carburant entrant dans ledit injecteur (14) et
    • activer ou désactiver ledit injecteur (14) au moyen desdits moyens d'actionnement (164), sur la base du débit déterminé et/ou de la masse déterminée dudit écoulement de carburant de sorte à réguler le débit et/ou la masse de carburant injecté dans le moteur par l'injecteur (14).

**12.** Procédé pour réguler la quantité de carburant qui peut être injectée dans un moteur à combustion interne au moyen d'un système (1') selon l'une quelconque des revendications 1 à 10,
**caractérisé en ce qu'**il comprend

a. une phase d'acquisition, dans laquelle au moins une propriété d'un écoulement de carburant entrant dans un injecteur (14) est détectée par des moyens de capteur (2'),
b. une phase de calcul, dans laquelle les moyens de calcul (161) calculent au moins un débit et/ou une masse dudit écoulement de carburant sur la base de ladite au moins une propriété détectée et des informations d'erreur sur la base d'au moins

    - des informations de référence déterminées sur la base d'un débit ou d'une masse ($M_{inj}$) de carburant à injecter dans le moteur,
    - des informations de rétroaction comprenant un débit et/ou une masse ($M_{inj}$*) d'un écoulement de carburant qui est injecté dans le moteur par l'injecteur (14), dans lequel lesdites informations de rétroaction sont déterminées sur la base du débit et/ou de la masse dudit écoulement de carburant entrant dans ledit injecteur (14),

c. une phase d'activation, dans laquelle ledit injecteur (14) est soit activé, soit désactivé, par le biais des moyens d'actionnement (164) de sorte à garder l'étendue des informations d'erreur sous un seuil.

13. Produit-programme informatique qui peut être chargé dans la mémoire d'un ordinateur électronique et qui comprend des parties de code logiciel pour exécuter les phases du procédé selon la revendication 12.

Fig. 1

Fig. 2

EP 3 408 530 B1

Fig. 3

**Fig. 4**

EP 3 408 530 B1

Fig. 5

Fig. 6

Fig. 7

16'

ECU

(optional)

13

14

141'

Fig. 8

2'

131'

FMV

11

17

5

1'

Fig. 9

EP 3 408 530 B1

Fig. 10

## REFERENCES CITED IN THE DESCRIPTION

### Patent documents cited in the description

- WO 2009019591 A2
- EP 2796690 A1
- EP 2138694 A1

### Non-patent literature cited in the description

- **JORACH RW et al.** Common Rail system from Delphi with solenoid valves and single plunger pump. *MTZ 03/2011,* 2011, vol. 72
- **MATSUMOTO S. et al.** The New Denso Common Rail Diesel Solenoid Injector. *MTZ 021/2013,* 2013, vol. 74